# EUROPEAN PATENT APPLICATION

(11) **EP 3 987 931 A1**
(43) Date of publication of application: **27.04.2022**
(21) Application number: 20904213.4
(22) Date of filing: 16.12.2020
(51) Int. Cl.: A01N 25/22, A01N 65/00, C08L 5/08

(54) **AQUEOUS SOLUTION COMPRISING AN INCLUSION COMPLEX, METHOD FOR OBTAINING SAME AND USE THEREOF FOR APPLICATION IN CROPS TO IMPROVE THEIR YIELD**

(30) Priority: 17.12.2019 ES 201931118
(71) Applicant: Universidad de Valladolid, 47001 Valladolid (ES)
(72) Inventor: MARTÍN GIL, Jesús, 47011 Valladolid (ES); ANDRÉS JUAN, Celia, 47005 Valladolid (ES); BUZÓN DURÁN, Laura, 34005 Palencia (ES); PÈREZ LEBEÑA, Eduardo, 47014 Valladolid (ES); MARTÍN RAMOS, Pablo, 47011 Valladolid (ES)
(74) Representative: Ungria López, Javier
(86) International application number: PCT/ES2020/070797
(87) International publication number: WO 2021/123480

(57) **Abstract**

The invention relates to an aqueous solution of an inclusion complex which comprises: a chitosan with a molecular weight comprised between 100,000 and 300,000 g/mol as a carrier agent and at least one biologically active compound applicable in agriculture selected from the group formed by: Equisetum arvense (Horsetail), Urtica spp (Nettle) extract, an amino acid, and any combination thereof. In addition, the invention relates to the method for obtaining the aqueous solution of the complex through the sonication of a gel previously obtained (also by sonication) from a chitosan gel with a carboxylic acid with the ABC. The invention further relates to the use of the aqueous solution to promote plant growth and to prevent pathogenic diseases in plants, uses which are significantly improved with respect to known compounds due to the synergistic effect found among their components.

## Description

### Technical field of the invention

The invention that is presented falls within the field of biochemistry and is applicable in the agricultural sector. Specifically, it is a complex of natural origin, which is a binary complex formed by high molecular weight chitosan and one or more biologically active compounds (BCA) applicable in agriculture, and of natural origin that are generally present in plant extracts.

### Background of the invention

Biochemistry is a field of remarkable breadth and continuous technological progress, applicable to the pharmaceutical, food, agricultural and cosmetic industries, industries which need to evolve to improve the efficacy of the substances applied in the intended use, providing solutions adapted to increasingly demanding needs. Each field of application requires specific conditions to be able to use said substances, the first one being their toxicity, since all substances that may be dangerous to health to a greater or lesser extent must be discarded; something that, for example, happens with most of the known essential oils. In this sense, basic substances, which are natural, safe, food grade and not classified as phytosanitary, are configured like those with the most acceptable use for this purpose. If they are accepted for a specific use (given their lack of toxicity), the efficacy of the active substances mainly depends on their bioavailability.

It is well known that the bioavailability of active ingredients improves with solubility, and having solutions without turbidity is essential to increase their bioavailability and physical use. Among the bioactive substances applicable in the field of agriculture, like those of natural origin, there are a large number of them that are not water-soluble, or are only partially soluble, such that they are not effective in practice. These substances include a number of phytochemical compounds, naturally present in plants or their derivatives (for example, flour), such as polyphenols, terpenes and very few essential oils, quinones and anthraquinones, flavonoids, proteins, lignans and others, which have antimicrobial activity and the solubility of which is practically zero and therefore, in the normal formulation thereof, they are unusable inside the organisms to which they are applied, since their absorption occurs naturally through water. In these cases, the concept of bioavailability is essential to ensure that the applied compound is used by the organism and that it is useful for its intended purpose.

Unfortunately, the administration of many of the aforementioned compounds often faces problems of solubility and/or permeability (Thanki, K., Gangwal, R.P., Sangamwar, A.T., Jain, S., 2013. Oral delivery of anticancer drugs: challenges and opportunities. J. Control. Release 170, 15-40). The development of new solubilisation, encapsulation and carrier techniques of these BACs applicable in agriculture, for the purposes of converting them into bioavailable compounds, is one of the main aspects of current chemistry and entails great future implementation. The best known techniques for improving the bioavailability of hydrophobic or partially water-insoluble compounds are: particle size reduction, the preparation of a solid dispersion, the use of surfactants, and the formation of inclusion complexes, emulsification and encapsulation in liposomes.

In chemistry, the figure of inclusion complexes such as those that are capable of producing host-guest complexes by including hydrophobic molecules is known. The complexation of different monomers leads to significant changes in solubility and facilitates the same by forming free radicals in an aqueous medium. In designing complexing carriers for BACs, it is very important to correctly select the material used as a complexing agent or matrix. The form of administration, potential toxicity, the nature of the product to be incorporated, the expected dose thereof, etc. must be taken into account. In this regard, the use of synthetic polymers and natural polymers as complexing carriers has been documented in the state of the art. However, the proclivity of synthetic polymers to cause toxicity problems makes them not recommended for use, whereas the alternative of using natural polymers, which do not have these drawbacks, requires, in contrast, the development of more complicated and expensive specific production methods.

A known encapsulating agent is cyclodextrin, which can be of the *α*-type (with a 6-glucose ring), *β*-type (7-glucose ring) and *γ*-type (8 glucoses). The most water-soluble cyclodextrin is a derivative of *β*, called hydroxypropyl betacyclodextrin. In cyclodextrin, the BAC is housed inside the toroid formed by the glucoses, but it has the drawback that it is difficult to make said BAC available and, therefore, make it active. There are numerous patents (for example, EP0422497B1) that describe this method, but it has not been brought to commercial scale due to the aforementioned drawback.

Another well-known encapsulating agent that is relevant in the case of the present invention as it is a basic substance approved under article 23 of Regulation (EC) No. 1107/2009 is chitosan. This use of the compound is not well developed at an industrial level, but it is described in the technical literature. Encapsulation techniques for active compounds (BACs) with chitosan-alginate-based biopolymers or polyelectrolytes are currently included in the literature. However, in these cases cross-linking agents are required, such as tripolyphosphate, for the formation thereof, and the preparation process requires a long time. The use of chitosan nanoparticles to carry active compounds in the treatment of plants against pathogens has been analysed in the literature, see Malerba, M. and Cerana, R. (2019): Recent applications of chitin- and chitosan-based polymers in plants; Polymers (Basel) 11(5): 839. There are other documents that have also analysed the encapsulating role of chitosan when combined with biologically active compounds, such as essential oils. Thus, Kalagatur et al. (2018): Antifungal Activity of Chitosan Nanoparticles Encapsulated With Cymbopogon martinii Essential Oil on Plant Pathogenic Fungi Fusarium graminearum; Frontiers in pharmacology, 9: 610, describe a solid compound formed by chitosan nanoparticles with a molecular weight of 100,000 g/mol, which are combined with an essential oil of *Cymbopogon martinii,* as a complex formed by the amino groups of chitosan and the functional groups of the oil components (geraniol, limonene, etc.). It should be remembered that the use of these essential oils is not allowed in agriculture since they are cytotoxic. Another reference is found in Khalili, S.T. et al. (2015): Encapsulation of Thyme essential oils in chitosan-benzoic acid nanogel with enhanced antimicrobial activity against Aspergillus flavus; LWT - Food Science and Technology, 60(1): 502-508, wherein the formation of a complex from chitosan and benzoic acid gel with Thymus vulgaris essential oil (the latter two not being allowed in agriculture) is disclosed, through sonication at 70 kHz. Obtaining chitosan gels is also disclosed in Hamdine, M. et al. (2005): Effect of organic and inorganic acids on concentrated chitosan solutions and gels; Int J Biol Macromol. 2005 Nov 15; 37(3): 134-42, though not its complexation with other substances.

The enhancing power of chitosan on the solubility of biologically active compounds has been analysed in the Spanish patent application ES2718225B2 (Univ. Valladolid), of the same inventors, wherein low molecular weight chitosan oligomers and steviol glycosides are used as encapsulating agents. Said complex is formed by sonication. These oligomers are difficult to manufacture, with the cost involved, and requires a previous step of formation by enzymatic hydrolysis, whereas the use of steviol glycoside in agriculture is not approved.

Indeed, from the point of view of biosustainability in the exploitation of agricultural crops, chitosan is emerging as an advantageous substance, since it is not chemotherapeutic (like phytosanitary crops) but it manages to activate a plant's defences; it is currently considered a basic substance for use in agriculture that is safe and without phytosanitary implications.

Given the foregoing, there is a need to develop BAC solubilisation systems that overcome the aforementioned drawbacks, not only by preserving the integrity of said bioactive compounds but also by carrying them, especially for hydrophobic or partially water-soluble compounds, and more particularly for compounds whose bioavailability involves difficulties, as is the case with polyphenols, terpenes, anthraquinones and, in general, antioxidant compounds.

The present invention aims to overcome the drawbacks raised so far in the use and application of biologically active compounds for the treatment of agricultural crops, through a new preparation, a complex made up of two natural substances (high molecular weight chitosan and at least one bioactive compound of variable solubility), in the ratios set out below, which is completely soluble and capable of being successively diluted in water, in order to be applied by foliar or root application. The advantage of this formulation lies in the exclusive use of basic natural polymers, without the need to use surfactants.

### Description of the invention

A first object of the invention is an aqueous solution of an inclusion complex which comprises: a chitosan with a molecular weight comprised between 100,000 and 300,000 g/mol (i.e., a high molecular weight), as a carrier agent, and at least one biologically active compound (BAC) applicable in agriculture selected from the group formed by: *Equisetum arvense* extract (Horsetail), *Urtica spp* extract (Nettle), an amino acid, and any combination thereof. Both components, chitosan and BAC, are bonded together by hydrogen bonds and, in the specific case of amino acids, additionally by the formation of quaternary ammonium salts between an amino group (present in the molecular structure of chitosan) and a carboxylic acid present in the amino acids.

The described complex, apart from being in an aqueous solution that is safe, has a natural composition (without synthetic polymers and without the need to use surfactants, as is common in the state of the art), the compounds that form it further being generally recognised as safe (GRAS), which completely favours its use in the treatment of crops, since it is a chemical complex that respects the environment and does not damage ecosystems by not including synthetic or toxic substances. In addition, by being dissolved in an aqueous solution, thanks to the fact that their solubility is significantly increased, they are thus fully available for their application.

Regarding the high molecular weight chitosan, it should be noted that it is a large molecule, which, as explained later, plays a fundamental role in the retention and protection of selected BACs and at the same time in increasing its bioavailability.

In the scope of the present invention, a biologically active or bioactive compound (BACs) is a natural chemical substance found in plants, as well as in the products derived from them (for example, in flour, in oil, etc.), in small quantities, and that have an effect (beneficial or detrimental) on living organisms. More specifically, within the scope of the present invention the term BAC refers to compounds allowed for use in agriculture, which, as mentioned, are generally safe (GRAS) and are classified as approved basic substances under article 23 of Regulation (EC) No. 1107/2009 because, basically, they are safe, food grade and not classified as phytosanitary compounds. BACs are usually defined by their antimicrobial activity but, from a broader point of view, those that act inside plants as growth inducers or strengtheners of the immune system can be defined in the same way, by promoting the production of phytoalexins. They can be obtained individually, although in many cases they are in the form of an extract or essential oil, and they are found in combination with others, although the use of most of these oils is not allowed in agriculture due to their toxicity (except, for example, onion oil or sunflower oil, classified as basic substances). In the specific case of the present invention, the BAC of the present invention, which meets all of these conditions, is limited to three specific cases, due to the properties observed when complexed with high molecular weight chitosan: on the one hand, the two extracts, *Equisetum arvense* (Horsetail) and *Urtica spp* (Nettle), which composition is characterised by the high content of phenols and polyphenols (such as flavonoids), and on the other hand, the amino acids, which can be selected within the group consisting of: Alanine, Arginine, Asparagine, Aspartic acid, Cysteine, Glutamine, Glutamic acid, Glycine, Histidine, Isoleucine, Leucine, Lysine, Methionine, Phenylalanine, Proline, Serine, Threonine, Tryptophan, Tyrosine and Valine; and more preferably it can be selected from Proline and Glycine.

The *Equisetum arvense* (Horsetail) and *Urtica spp* (Nettle) extracts contain active substances that are insoluble or partially water-soluble, such that the formation of the inclusion complex with chitosan, according to the present invention, is essential to increase the bioavailability of its components, flavonoids (quercetin and isoquercitrin, kaempferol, galuteolin and equisethrin, among the most important), polyphenols, aloin and telluric acid, among the most important. Minor but important components of these extracts for the invention are: traces of alkaloids (nicotine, 3-methoxypyridine, equisetin, palustrinine and palustrine), tannins, phytosterols (β-sitosterol, campesterol, isofucosterol), equisetonin (5%), saponin that produces arabinose, fructose and equisetogenin by hydrolysis; fatty acids (linoleic, linolic, and oleic), aconitinic acid (equisetic acid), benzoic acid, malic acid, gallic acid, citric acid, pectic acid, vitamin C, resin, articulin and isoarticulin (spores), lignans (caffeic acid, ferulic acid, dicafeoil-mesotartaric and p-coumaric).

In a preferred embodiment of the complex, it contains a combination of both BACs, *Equisetum arvense* (Horsetail) and *Urtica spp* (Nettle). The best synergistic effect with this combination of the complex has been proven in the growth of the plant and the production of its biomass, as shown in the examples.

The great innovation of these complexes and their advantage in the world of agriculture is that by being in an aqueous solution they can be applied to a crop, thus obtaining unexpectedly improved results: their effect on plant growth and their ability to strengthen the immune system is far superior to that of the individual components, there being synergy between them and a higher production of phytoalexins and an increase in foliar growth and plant fruits having been found. This synergistic effect has not been described so far and the tests carried out in the field on various crops demonstrate this, as set out herein. In other words, the advantage is not only that the BAC becomes bioavailable, but rather, by forming a complex with the high molecular weight chitosan and being in an aqueous solution, the effects achieved when applied to plants is much greater than expected. In addition, another very important advantage of the complex is that its properties and, therefore, its beneficial effects are not altered when diluted in large quantities of water, the total solubilisation of the BCAs also having been verified in these situations, which constitutes a very advantageous result given the simplicity of the method and the results obtained.

As discussed in the previous section, many bioactive compounds are water-insoluble, although as a general rule they have a variable degree of water solubility, from insoluble to partially soluble. In all cases of the present invention, the solubility of the BCA is significantly improved in the described complex, which also significantly increases the bioavailability of the active components that comprise the two extracts described, such as flavonoids and polyphenols, aloin and ferulic acid, among others, which are water-insoluble, and, moreover, activates amino acids by protonating them. Indeed, the technique proposed in the present invention for forming the aqueous solution of the complexes increases the aqueous stability and at the same time the solubility of these BCAs in order to, on the one hand, protect them and keep them stable during storage thereof and, on the other hand, facilitate the administration thereof, which favours their application and effectiveness in the agricultural sector.

It has been found that the beneficial effects observed in the described complex are based on the weak interactions produced by the formation of bonds by hydrogen bonding between the amino groups of the high molecular weight chitosan with the BCAs when they are mixed (by sonication as will be seen) and, furthermore, thanks to the formation of quaternary ammonium salts between an amino group and a carboxylic acid, in the case of amino acids, which favours the bioavailability thereof.

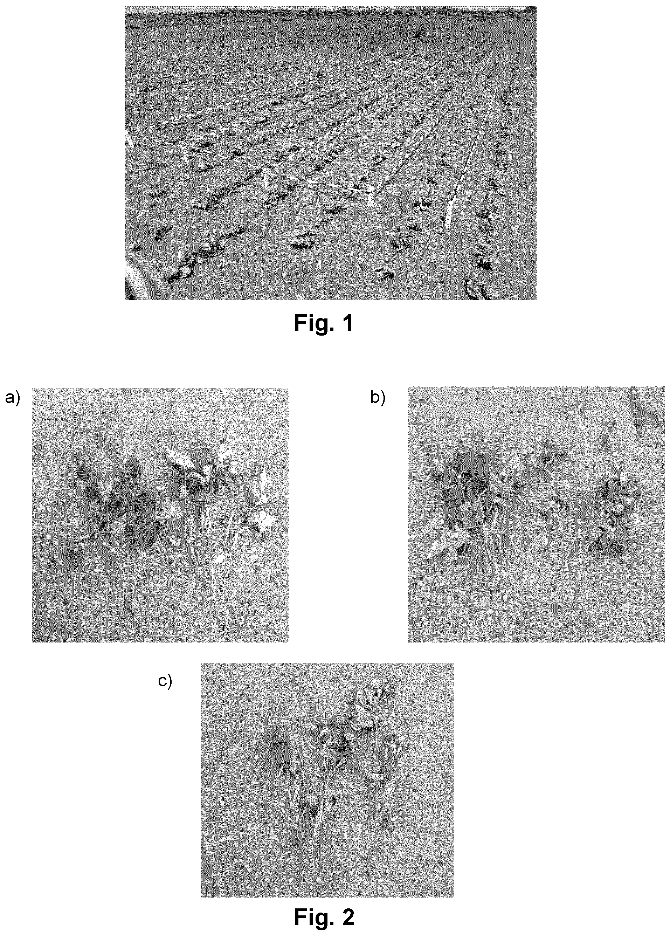

The hydrogen bond, despite being a weak interaction, is a strong electrostatic force when many molecules are bonded together simultaneously, which provides great stability to the complex, since it retains the bioactive compound (see Figure 1) at the same time that it allows for the subsequent dilution thereof in large amounts of water. When these bonds appear, what is essential is the action of the ultrasound that is applied, which will be seen in one of the following points referring to the method for obtaining the complex. The present invention is based on the fact that the sonication of the mixture (direct application of ultrasound on the solution containing both compounds) is necessary for the formation of these hydrogen bonds to appear and accelerate, since if said ultrasound is not applied, the bonds do not appear or they do so very slowly, making the industrial process described in this report unfeasible. It has been proven that the interactions between the formed complexes are weaker than those shown with other complexes such as cyclodextrins, since the size of the complex is larger, given that it is high molecular weight chitosan. The consequence of this property is that bioproducts based on chitosan complexes such as those described herein have a greater ability to release BCAs than those that could be obtained with cyclodextrins as a carrier agent.

The new complex described has a synergistic effect on the growth of crops, wherein it is easily applicable because it is water-soluble even though it incorporates BCAs that originally show even a zero degree of solubility, and, what is most important, the activity of the complex is synergistic, since the effects of the bioactive compounds that are part of the complex are greater than those of the separate compounds. Faced with the unexpected nature of the result, the aqueous solution has been analysed and it has been found that this synergistic effect may be due to the protonation of the BCAs used when combined with the high molecular weight chitosan (in the slightly acidic aqueous solution, pH from 3.5 to 5). When the complex is formed and an acidic medium is generated, a release of protons occurs, such that the selected compounds, horsetail, nettle and amino acids, increase their activity as BCAs. In this case, and this being essential in the case of amino acids, it is verified that the amino group thereof is protonated, in other words, it is not in its usual NH₂ form but as NH₃+. This is the key for amino acids, which do not act as BCAs in their normal form, to do so in their protonated form, activating themselves.

Preferably, the weight ratio between the components, high molecular weight chitosan and the listed BCAs, obeys a ratio selected between 1:1 and 2:1, although the latter is more preferable because it is more cost-effective, without the end result being altered. In other words, since the solubility of BCAs increases with the concentration of chitosan by weight, a 1:1 ratio can be used but it is recommended that stoichiometry preferably be used (1 BCA: 2 Chitosan) in this invention (or a more cost-effective one) for forming supramolecular structures and in which the BCA is trapped by weak or short-range molecular interactions with the amino group of the chitosan polymer. If the concentration of chitosan is increased, the solubilisation of the BCA can be increased, but this also implies a greater economic expense over the theoretical concentrations required.

The aqueous solution of the complex can have multiple concentrations of the same without the result being altered as well. This can range from a concentrated aqueous solution (of at least 75-100 grams of complex -50 grams of chitosan for every 25-50 grams of BCA/litre of water) to a diluted aqueous solution, in other words, any dilution from the previously given concentration for 1 litre of aqueous solution, with 75-100 grams of complex -50 grams of chitosan for every 25-50 grams of BCA, up to a dilution of 1 litre of aqueous solution for every 200 litres of water.

Also preferably, the amount of high molecular weight chitosan in the aqueous solution is equal to or less than 8% by weight with respect to the total volume of the solution.

A second object of the present invention is a method for obtaining the aqueous solution of the complexes described above, comprising the following steps:
a) preparing an aqueous solution which comprises chitosan with a molecular weight comprised between 100,000 and 300,000 g/mol and a carboxylic acid;
b) applying ultrasound to the mixture until a stable and homogeneous chitosan gel is formed; and
c) adding the at least one BCA and applying ultrasound to form the complex in the aqueous solution.

The essential method for preparing the complex in an aqueous solution is reduced to mixing the components and carrying out simple ultrasound-assisted stirring by introducing the sonication head into the aqueous solution, in order to ensure that the complex is formed and to facilitate BCA solubilisation. Through sonication processes (direct application of ultrasound on the solution) in an aqueous medium, new bioproducts or macromolecules are obtained in liquid form by generating weak interactions due to the formation of hydrogen bonds between the amino groups present in chitosan with the BCAs and, therefore, quaternary ammonium salts. This allows for the subsequent dilution thereof in large amounts of water, which is also an objective of the present invention. At this time, the BCA is completely solubilised.

The process is carried out in two steps, and carboxylic acid is necessary in the first step to achieve the formation of the chitosan gel before mixing it with the BCA, since the pH must be lowered in order for chitosan to solubilise in water; the pH of the gel that is formed is thus around 4, i.e., particularly between 3.5 and 5.

The chemical structure of the chitosan gel formed with carboxylic acid, which is citric acid, is represented below. The molecules with electrostatic charges, forming the quaternary ammonium salts, are represented:

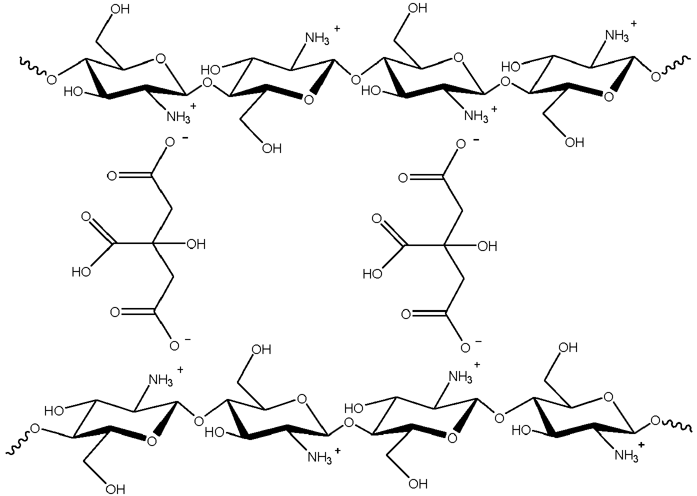

The following shows the chemical structure of different inclusion complexes obtained in the aqueous solution in the present invention:
- *Chitosan complex with aloin, an anthraquinone glycoside that is one of the components of the horsetail and nettle extracts that are used as a biologically active compound in the present invention:* 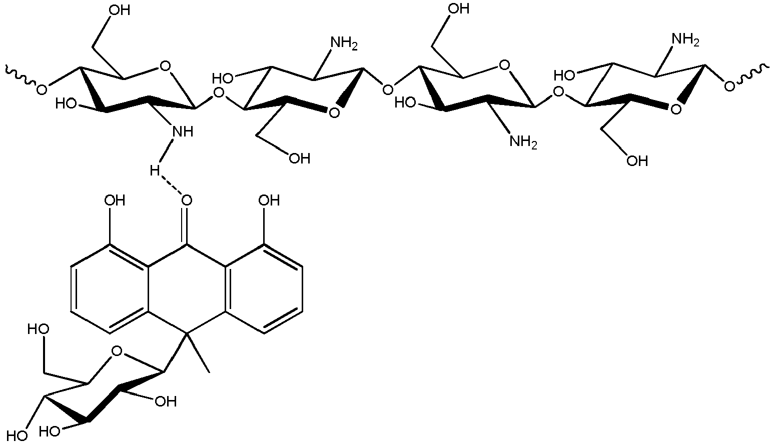
- *Chitosan complex with ferulic acid, a hydroxycinnamic acid that is one of the components of the horsetail and nettle extracts that are used as a biologically active compound in the present invention:* 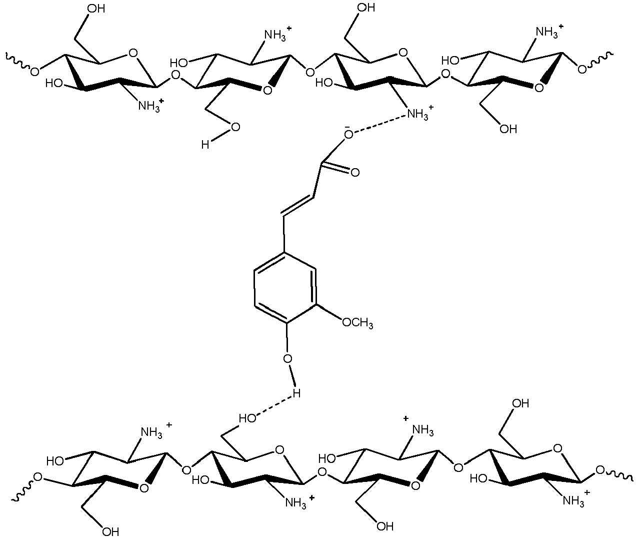
- *Chitosan complex with gallic acid, which is one of the components of the horsetail and nettle extracts that are used as a biologically active compound in the present invention:* 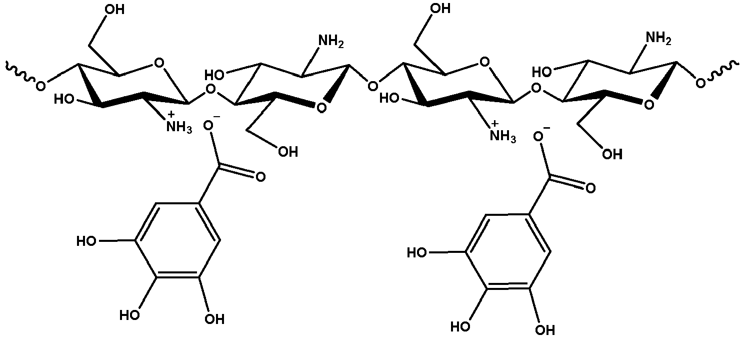
- *Chitosan complex with kaempferol, which is one of the components of the horsetail and nettle extracts that are used as a biologically active compound in the present invention:* 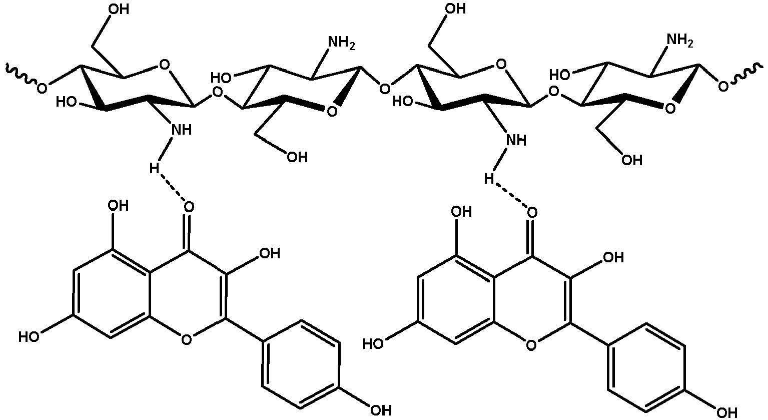
- *Chitosan complex with the amino acid histidine* as a *biologically active compound:* 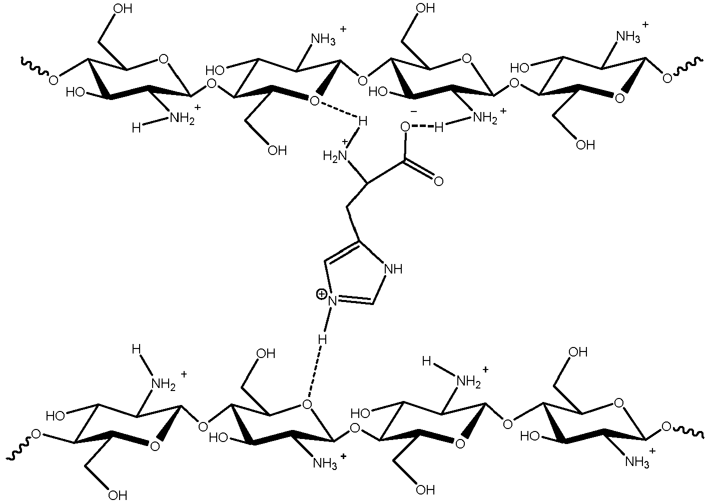
- *Chitosan complex with the amino acid tyrosine as a biologically active compound:* 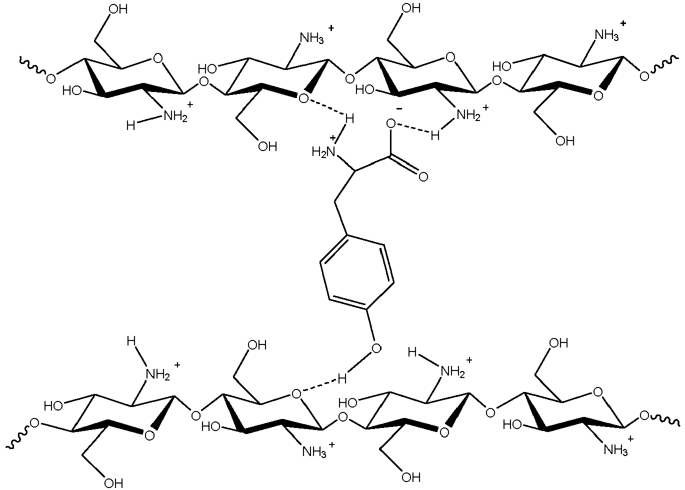
- *Chitosan complex with the amino acid cysteine as a biologically active compound:* 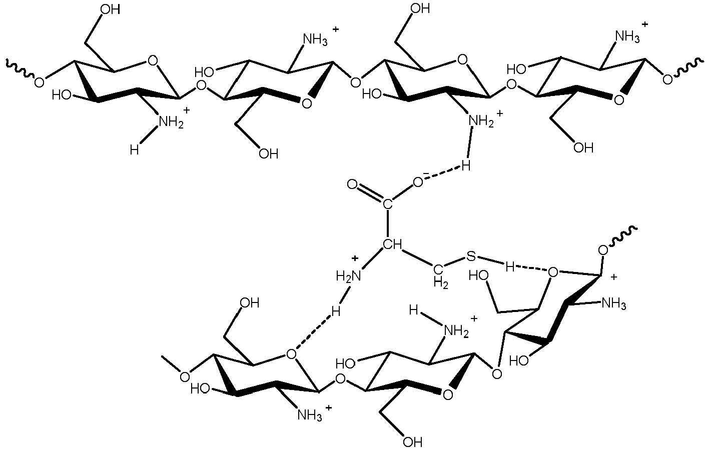
- *Chitosan complex with the amino acid glycine as a biologically active compound:* 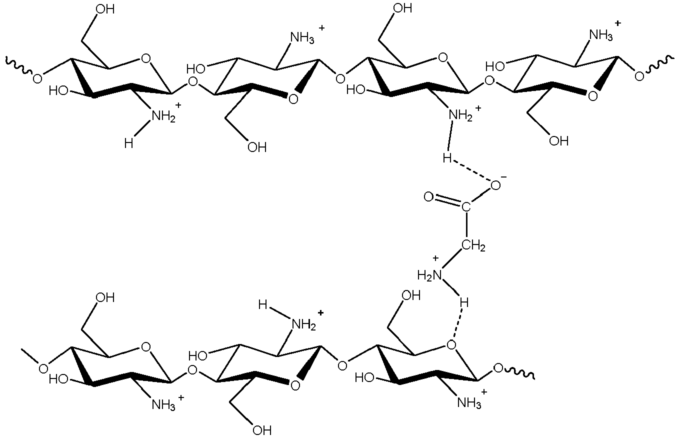
- *Chitosan complex with the amino acid arginine as a biologically active compound:* 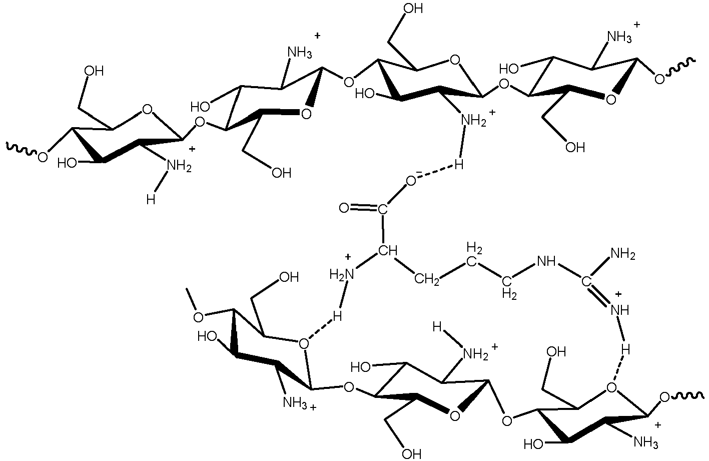
- *Chitosan complex with the amino acid proline as a biologically active compound, bonded to two different high molecular weight chitosan chains, and in two different positions:*

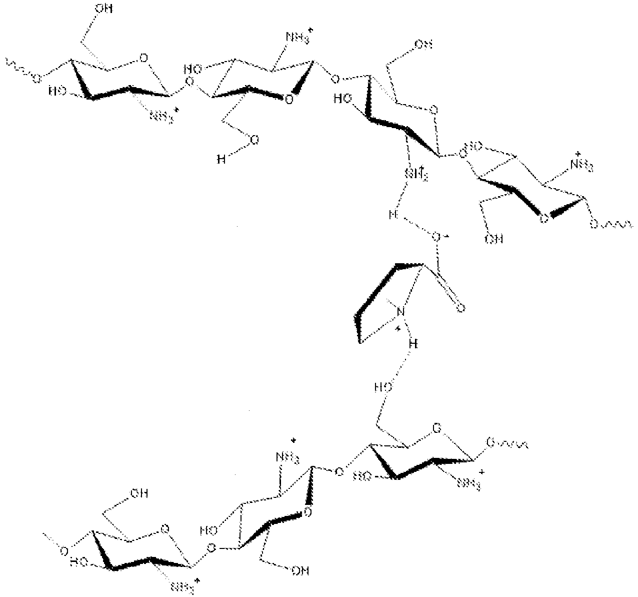

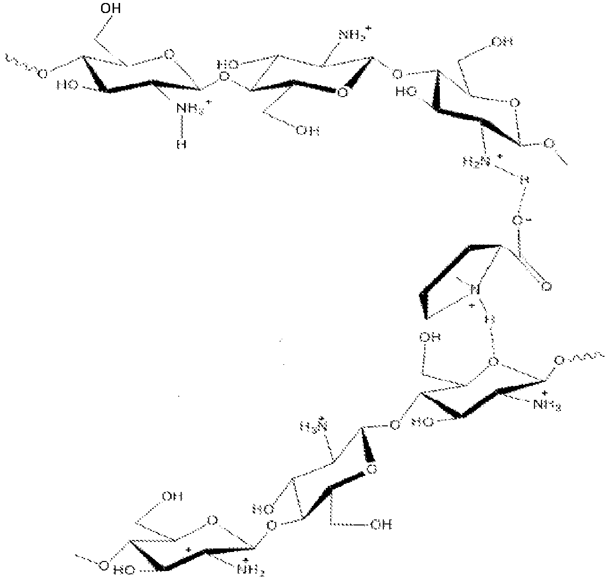

The solubility and characterisation of the BCAs have been studied with a UV-VIS spectrophotometer and/or an HPLC-Mass chromatograph, and it has been verified that, surprisingly and unexpectedly, the water solubility of the BCAs, even in the case of those that are originally insoluble, is maintained even in consecutive dilutions (of up to 1 litre of aqueous solution of the complex per 100 litres of water). This unexpected result is key for applying the product when treating the crop, by formulating a concentrated product and being able to market it in this way, such that when applying it farmers can dilute 1 litre of the complex in aqueous form in at least 100 litres of water.

Preferably, the weight ratio in the mixture of chitosan and carboxylic acid is 1:1 (for example, 50 grams of chitosan with 50 grams of carboxylic acid in one litre of water).

Also preferably, carboxylic acid can be selected from the group consisting of citric acid, acetic acid and propionic acid.

Although not a decisive factor for preparing the aqueous solution of the complex, steps a) and b) for forming the stable chitosan gel are preferably carried out at a temperature between 50 and 70 °C, even more preferably at 60 °C.

In a preferred embodiment of step c), the weight ratio in the mixture of chitosan and BCA is selected between 1:1 and 2:1 (for example, 50 grams of chitosan per 50 grams of BCA, or 50 grams of chitosan per 25 grams of BCA in 1 litre of water), in order to achieve solubilisation of the BCA when the supramolecular structures are formed, the BCA being trapped by weak or short-range molecular interactions with the amino group of the chitosan polymer. As discussed previously, the stoichiometric ratio 2:1 is even more preferable, as it achieves the same result but in a more cost-effective manner. The mixture can include more than one BCA, such that between them as a whole they maintain the previously defined ratio.

Also preferably, the amount of chitosan in water is equal to or less than 8% by weight of the total volume of the solution.

Preferably, in steps b) and c), mixing by sonication, in other words, direct application of ultrasound on the solution, is carried out at 20 kHZ, first to form the chitosan gel and then to promote the formation of the complex, solubilising the BCA. The prepared mixtures are dispersed by direct sonication with an ultrasound head, for a time preferably comprised between 3 and 10 min in step b) and between 5 and 15 min in step c), enough to form the weak intermolecular interactions by hydrogen bonds and the formation of quaternary ammonium salts. More preferably, ultrasound is applied for 10 minutes during each of the steps b) and c).

Preferably, the method described above comprises diluting the complex obtained in an aqueous solution in water, in one or more successive dilutions, in a ratio comprised between 1:1 (1 litre of aqueous solution of the complex, containing 50 grams of chitosan for every 25-50 grams of BCA, per 1 litre of water) to 1:100 (1 litre of aqueous solution of the complex per 200 litres of water).

A third object of the present invention is the use of the aqueous solution of the complex that is defined above, as a stimulator of plant growth, in other words, to enhance plant growth (increase biomass production). Its application in the field of agriculture seems very relevant, as evidenced by the results of the experiments carried out with the invention.

It has been found that when applying the solution of the complex on a crop, the production thereof increases significantly, mainly thanks to the fact that it increases the solubility and bioavailability in water of the bioactive compounds it contains, not only of the non-soluble ones, but also of those that are partially soluble in said medium. In fact, the complex of the present invention has greater activity than that obtained from using the components separately, there being synergy between the components. One advantage of this complex in an aqueous solution is that it does not require the incorporation of emulsifiers or surfactants to improve its solubility and bioavailability, as is often the case in the prior art. In addition, said bioavailability is not affected when consecutive dilutions are carried out starting from the concentrated preparation of the complex, which allow for the use thereof in agriculture by means of foliar or root application.

Lastly, another object of the invention is the use of the aqueous solution of the complex that has been defined to prevent and treat pathogenic diseases in plants. The type of pathogens whose growth is prevented in plants with the use of the aqueous solution object of the invention is very diverse and broad. In a preferred case, the complex is used to prevent gram-negative bacteria. In another preferred case, the aqueous solution of the complex is used to prevent the growth of fungi as diverse in their genus as are the causes of the esca grapevine disease, which cause wood to rot, or the fungus *Fusarium culmorum.* In these particular cases, the more preferred BCA of the complex is proline, a water-insoluble amino acid that, by being part of the complex, has high bioavailability.

Both uses preferably comprise applying an aqueous solution of the described complex on the crop, by spraying (foliar application) or on the ground (root application), although the foliar application is always preferred because efficacy and absorption by the plant is always greater. For practical and economic reasons, the use preferably involves the application of a very diluted solution of the complex, of 1 litre of aqueous solution of the complex per 50, 100 or up to 200 litres of water, but, logically, since the effect is not altered by the volume of solution, it can be applied in any of the concentrations protected herein.

### Brief description of the figures

**Figure 1** shows an experiment plot corresponding to Example 2, in the vicinity of Veguellina de Orbigo (Leon). 3 zones are marked: control where no treatment is applied, and the corresponding application plots 1 and 2.
**Figure 2** shows photographs taken of bean plants collected in each of the analysis plots: a) Plot 1; b) Plot 2; and c) Control plot.

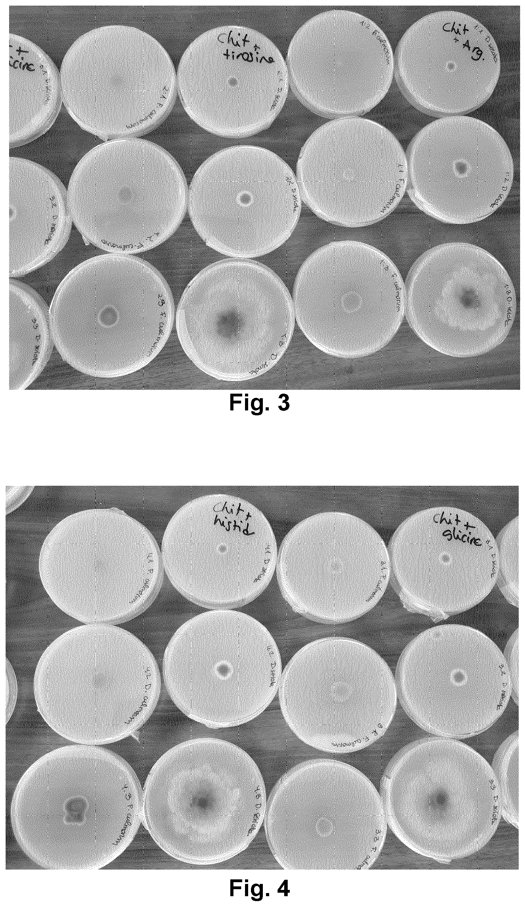

**Figure 3** shows photographs of Petri dishes with results from the application of an aqueous solution of the complex with amino acids such as BCA. Specifically, the chitosan complexes with Arginine and Tyrosine have been tested in two different strains of fungi: *Diplodia seriata* and *Fusarium culmorum.* Different concentrations of the complex were used (from 100 ppm to 500 ppm) in a fungal growth medium (PDA) to determine the Minimum Inhibitory Quantity (MIQ).
**Figure 4** shows photographs of Petri dishes with results from the application of an aqueous solution of the complex with amino acids such as BCA. Specifically, the chitosan complexes with Glycine and Histidine have been tested in the same strains of fungi as in Figure 3: *Diplodia seriata* and *Fusarium culmorum.* Different concentrations of the complex were used (from 100 ppm to 500 ppm) in a fungal growth medium (PDA) to determine the Minimum Inhibitory Quantity (MIQ).

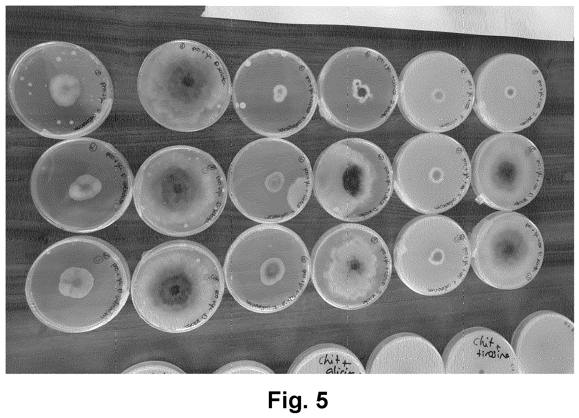

**Figure 5** shows photographs of Petri dishes with results from the application of an aqueous solution of the complex, formed from a chitosan and citric acid gel with different amino acids such as BCA (arginine, glycine, proline, histidine and tyrosine) to prevent and treat the growth of two fungi: *Diplodia seriata* and *Fusarium culmorum.* The results of different mixtures are provided herein, even using glycerin instead of chitosan as a carrier agent, with proline and citric acid, and the behaviour thereof in the growth of fungi was evaluated.

### Examples

### Example 1: Methods for obtaining and characterising an aqueous solution of the complex described in the present invention, with Urtica spp. as BCA and with a combination of Equisetum arvense and Urtica spp as BCA.

### 1.1 First method for obtaining

In 1 litre of hot water at 60°C, 50 grams of citric acid and the same amount of chitosan are added, the high-power ultrasound head (20 kH) is introduced and the corresponding chitosan gel is formed, such that the pH of this gel is from 3.5 to 5. Once all the chitosan is dissolved so that no lumps appear and once the gel is stabilised, 25 to 50 grams of *Equisetum arvense* extract are added and the ultrasound head is applied for at least 10 minutes. At this time, the complete solubilisation in the chitosan gel of the mentioned extract is verified. To be applied by means of foliar or root application, each litre of the solution described in this exemplary embodiment must be dissolved in at least 100 litres of water and up to 200 litres of water.

### 1.2. Second method for obtaining

In 1 litre of hot water at 60°C, 50 grams of acetic acid and the same amount of chitosan are added, the high-power ultrasound head (20 kH) is introduced and the corresponding chitosan gel is formed, such that the pH of this gel is between 3.5 and 5. Once all the chitosan is dissolved so that no lumps appear and the gel has stabilised, 25 to 50 grams of *Urtica spp* extract are added and the ultrasound head is applied for at least 10 minutes. At this time, the complete solubilisation in the chitosan gel of the mentioned extract is verified. To be applied by means of foliar or root application, each litre of the solution described in this exemplary embodiment must be dissolved in at least 100 litres of water and up to 200 litres of water.

### 1.3. Third method for obtaining

In 1 litre of hot water at 60°C, 50 grams of propionic acid and the same amount of chitosan are added, the high-power ultrasound head (20 kH) is introduced and the corresponding chitosan gel is formed, such that the pH of this gel is a value comprised between 3.5 and 5. Once all the chitosan is dissolved so that no lumps appear and the gel has stabilised, 15 to 25 grams of *Urtica spp* extract and the same amount by weight of *Equisetum arvense* extract are added and the ultrasound head is applied for at least 10 minutes. At this time, the complete solubilisation in the chitosan gel of the mentioned extract is verified. To be applied by means of foliar or root application, each litre of the solution described in this exemplary embodiment must be dissolved in at least 100 litres of water and up to 200 litres of water.

In the three embodiments, it is observed that different carboxylic acids can be used to form the chitosan gel, since the aim is to lower the pH so that the chitosan is solubilised in water.

### Example 2: Use of the aqueous solutions of the complex described in Example 1 to enhance plant growth

Experimental studies have been carried out with the aqueous solutions of the complexes described in the previous example (containing *Urtica spp* as BCA in the first case and a combination of *Equisetum arvense* and *Urtica spp* as BCA in a second case) in plots with bean and hops crops, distinguishing between:
- a control plot,
- an application plot 1, wherein the complex of the aqueous solution comprises chitosan and *Urtica spp;* and
- an application plot 2, wherein the complex of the aqueous solution comprises chitosan, *Equisetum arvense* and *Urtica spp.*

These plots are shown in Figure 1. The application of the aqueous solution on the crops was foliar application.

When analysing biomass production, measured in the number of leaves and the number of fruits on the bean plants collected in each of the analysis plots after the different treatments (without treatment -control-; complex containing *Urtica spp.* - application plot 1-; and complex containing *Equisetum arvense* and *Urtica spp.* - application plot 2-), the following results were obtained:

| **PLOT** | **LEAF PRODUCTION** | **FRUIT PRODUCTION** |
|---|---|---|
| CONTROL | Plants with 14-21 trifoliate leaves | Plants with 9-10 valid pods* |
| APPLICATION 1 | Plants with 18-21 trifoliate leaves | Plants with 12-13 valid pods |
| APPLICATION 2 | Plants with 24-26 trifoliate leaves | Plants with 14-15 valid pods |

| | | |
|---|---|---|
| * *In the present study, a valid pod is considered one that has more than 3 grains.* | | |

The comparative analysis of these results shows a significant increase of 17% in leaves and 25% in the pods of the plant in application plot 1 with respect to the control plot, and a significant increase of 45% in leaf production and an increase of 50% in pod production in application plot 2 with respect to the control plot. These results thus show a synergistic effect between the components of the complex in their effect of promoting plant growth.

### Example 3: Use of the aqueous solutions of the complex described in Example 1 to prevent pathogenic diseases

In the previous plots, not only greater plant growth was found, but by chance a significantly higher resistance against pathogens was observed. Thus, during the experiment, the plots were strongly attacked by powdery mildew. In this situation, after collection, it was seen that the plots with the crop treated with the complex of the present invention, in its two variants of application herein, were clear of powdery mildew, but this was not the case for the control plot.

### Example 4: Obtaining an aqueous solution of the complex described in the present invention, with amino acids.

Aqueous solutions were prepared by following the same methodology as in Example 1, but wherein the BCA was an amino acid: in 1 litre of hot water at 60°C, 50 grams of citric acid and the same amount of chitosan are added, the high-power ultrasound head (20 kH) is introduced and the corresponding chitosan gel is formed, such that the pH of this gel is from 3.5 to 5. Once all the chitosan is dissolved so that no lumps appear and once the gel is stabilised, 25 to 50 grams of arginine are added and the ultrasound head is applied for at least 10 minutes. At this time, the complete solubilisation in the chitosan gel of the mentioned extract is verified.

This same protocol was applied to obtain aqueous solutions of the complex formed by chitosan and other amino acids, specifically: glycine, proline, histidine and tyrosine.

### Example 5: Application of the aqueous solutions with amino acids as BCAs according to Example 4, the results of which are shown in Figures 3-5.

### 5.1. Aqueous solutions of chitosan complexes with arginine and with tyrosine (separately) as BCA

In a first experiment, chitosan complexes with arginine and tyrosine were tested in two strains of fungi of very different genus: *Diplodia seriata,* a *cause of the* esca *grapevine disease,* and *Fusarium culmorum.* Different concentrations of the complex were used (from 100 ppm to 500 ppm) in a fungal growth medium (PDA) to determine the Minimum Inhibitory Quantity (MIQ).

Specifically, from each of the two aqueous solutions with arginine and with tyrosine prepared in Example 4, 1 gram by weight was extracted by pipette and diluted in three different volumes of water: 10 ml, 25 ml and 50 ml. Subsequently, 5 ml of each dilution was extracted and added to as many other Petri dishes containing 15 ml of PDA growth medium (peptone and glycosides) and mixed homogeneously. From the two Petri dishes in which the fungi *Diplodia seriata* and *Fusarium culmorum* were grown, samples thereof were taken and added to the dishes with the aqueous solution.

The results are shown in Figure 3. It was observed that the MIQ is 120 ppm for the two cases studied.

### 5.2. Aqueous solutions of chitosan complexes with glycine and with tyrosine (separately) as BCA

In a second experiment, aqueous solutions of chitosan complexes with glycine and histidine were tested in the same strains of fungi as in the previous experiment: *Diplodia seriata* and *Fusarium culmorum.* Different concentrations of the complex were used (from 100 ppm to 500 ppm) in a fungal growth medium (PDA) to determine the Minimum Inhibitory Quantity (MIQ).

The methodology of preparation of the experiment, as well as the results (shown in Figure 4), were repeated: it was observed that the MIQ is 120 ppm for the two cases studied.

### 5.3. Aqueous solutions of chitosan complexes with arginine, glycine, proline, histidine and tyrosine (separately) as BCA

Experiments 5.1 and 5.2 were repeated in exactly the same way, but now with each of the five solutions obtained in Example 4, wherein each of them was defined by a different BCA that was one of the amino acids selected from: arginine, glycine, proline, histidine and tyrosine.

The results, shown in Figure 5, were repeated again: it was observed that the MIQ is 120 ppm for the two cases studied.

To compare and confirm the beneficial effect of the compositions object of the present invention and their synergistic effect, an aqueous solution was prepared with the complexes of BCAs, but wherein the carrier agent was glycerin, not chitosan. This allowed us to confirm the effect of chitosan. Thus, it was confirmed that a glycerin and proline-based composition did not work against pathogens. Another composition was also prepared, following the same methodology as previously described, but with proline, glycerin and citric acid. This composition improved the results compared to the previous one (without citric acid), but it did not achieve the same MIQ results as with the solutions of the present invention.

## Claims

1. An aqueous solution of an inclusion complex which comprises: a chitosan with a molecular weight comprised between 100,000 and 300,000 g/mol, as a carrier agent, and at least one biologically active compound applicable in agriculture selected from the group formed by: *Equisetum arvense* extract, *Urtica spp* extract, an amino acid, and any combination thereof; wherein the chitosan and the biologically active compound are bonded together by hydrogen bonds and, in the case of amino acids, also by the formation of quaternary ammonium salts between an amino group present in the molecular structure of chitosan and a carboxylic acid present in said amino acid.

2. The aqueous solution of the complex according to the preceding claim, wherein the amino acid is selected from the group consisting of: Alanine, Arginine, Asparagine, Aspartic acid, Cysteine, Glutamine, Glutamic acid, Glycine, Histidine, Isoleucine, Leucine, Lysine, Methionine, Phenylalanine, Proline, Serine, Threonine, Tryptophan, Tyrosine and Valine.

3. The aqueous solution of the complex according to the preceding claim, wherein the amino acid is selected from Proline and Glycine.

4. The aqueous solution of the complex according to claim 1, wherein the biologically active compound is a combination of *Equisetum arvense* and *Urtica spp.*

5. The aqueous solution of the complex according to any one of claims 1 to 4, wherein the weight ratio between the high molecular weight chitosan and the biologically active compound has a ratio selected between 1:1 and 2:1.

6. The aqueous solution of the complex according to any one of claims 1 to 5, which has a complex concentration from 75 g-100 g of complex per 1 litre of water, wherein a 1:1 to 2:1 ratio of chitosan and biologically active complex is maintained, up to a concentration of 75 g-100 g of complex per 200 litres of water.

7. The aqueous solution of the complex according to any one of claims 1 to 6, wherein the amount of high molecular weight chitosan in the aqueous solution is equal to or less than 8% by weight with respect to the total volume of the solution.

8. A method for obtaining the aqueous solution of the complexes defined in any one of the preceding claims, **characterised in that** it comprises the following steps:
a) preparing an aqueous solution which comprises chitosan with a molecular weight comprised between 100,000 and 300,000 g/mol and a carboxylic acid;
b) applying ultrasound to the mixture until a stable and homogeneous chitosan gel is formed; and
c) adding the at least one BCA and applying ultrasound to form the complex in the aqueous solution.

9. The method according to the preceding claim, wherein the weight ratio in the mixture of chitosan and carboxylic acid is 1:1.

10. The method according to any one of claims 8 or 9, wherein the carboxylic acid is selected from the group consisting of citric acid, acetic acid and propionic acid.

11. The method according to any one of claims 8 to 10, wherein steps a) and b) for forming the stable chitosan gel are carried out at a temperature comprised between 50 and 70 °C.

12. The method according to any one of claims 8 to 11, wherein the weight ratio in the mixture of chitosan and the biologically active compound is selected between 1:1 and 2:1.

13. The method according to any one of claims 8 to 12, wherein the amount of chitosan in water is equal to or less than 8% by weight of the total volume of the solution.

14. The method according to any one of claims 8 to 13, wherein, in steps b) and c), mixing by sonication is carried out at 20 kHZ.

15. The method according to any one of claims 8 to 14, wherein sonication is applied for a time comprised between 3 and 10 min in step b) and between 5 and 15 min in step c).

16. The method according to any one of claims 8 to 15, which comprises diluting the complex obtained in an aqueous solution in water, in one or more successive dilutions, in a ratio comprised between 1 litre of aqueous solution/1 litre of water and up to 1 litre of aqueous solution/200 litres of water.

17. Use of the aqueous solution defined in any one of claims 1 to 7, as a stimulator of plant growth to enhance the increase in biomass production.

18. Use of the aqueous solution defined in any one of claims 1 to 7, to prevent pathogenic diseases in plants.

19. The use according to claim 18, wherein the pathogen is selected from a fungus and a gram-negative bacterium.

20. The use according to claim 19, wherein the pathogen is a fungus that causes esca grapevine disease.

21. The use according to any one of claims 17 to 20, wherein the aqueous solution of the complex is applied by spraying on the plant or by application on the ground.
